**Europäisches Patentamt**

**European Patent Office**

**Office européen des brevets**

(19)

(11) **EP 1 498 700 A2**

(12) **EUROPÄISCHE PATENTANMELDUNG**

(43) Veröffentlichungstag:
**19.01.2005 Patentblatt 2005/03**

(51) Int Cl.⁷: **G01F 1/66**, B06B 1/02

(21) Anmeldenummer: **04450143.5**

(22) Anmeldetag: **14.07.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **16.07.2003 AT 5072003 U**

(71) Anmelder: **AVL List GmbH**
**8020 Graz (AT)**

(72) Erfinder:
• **Kupnik, Mario, Dr.**
**8700 Leoben (AT)**

• **Wiesinger, Michael, Dr.**
**8010 Graz (AT)**
• **Schröder, Andreas, Dr.**
**1170 Wien (AT)**
• **Harms, Klaus-Christoph, Dr.**
**8051 Graz (AT)**

(74) Vertreter: **Laminger, Norbert et al**
**Prinz-Eugen-Strasse 70**
**1040 Wien (AT)**

(54) **Ultraschall-Gasdurchflusssensor sowie Vorrichtung zur Messung von Abgas-Strömungen von Verbrennungskraftmaschinen sowie Verfahren zur Ermittlung des Durchflusses von Gasen**

(57) Ein Ultraschall-Gasdurchflusssensor besteht aus einem vom Gas durchströmten Messrohr mit Sende- und Empfangs-Schallwandler und einer Sende-, Empfangs- und Auswerte-Elektronik.

Um einen Sensor mit verbesserter Leistungsfähigkeit, insbesonders Temperaturfestigkeit und der Reduzierung und Berücksichtigung eines Temperaturprofils, zu bauen, sind die Schallwandler (7, 8, 9, 10) als kapazitive elektroakustische Ultraschallwandler ausgeführt und sind Einrichtungen (5, 6) zur Vergleichmäßigung des Gastemperaturprofils und zur Minimierung des Einflusses des Temperaturprofils auf die Strömungsmessung vorgesehen.

Für das Verfahren zur Ermittlung des Durchflusses von Gasen, wobei die mittlere Strömungsgeschwindigkeit und daraus die strömende Gasmenge aus der Laufzeit von zwei Schallsignalen mit hoher zeitlicher Auflösung ermittelt wird, soll eine genauere und zuverlässigere Ermittlung des Volumsstromes bzw. Massenstroms von Gasen, insbesondere in hochdynamischen Strömungen, erreicht werden.

Dazu wird nach Bestimmung der Laufzeiten ein Schätzwert für den Durchfluss berechnet (35) und wird dieser zumindest mittels einer charakteristische Temperatur des Gases und der Temperatur der Wand des Messrohres korrigiert (36).

Fig 1

## Beschreibung

Die Erfindung betrifft einen Ultraschall-Gasdurchflusssensor, umfassend zumindest einen Sende- und einen Empfangs-Schallwandler und eine Sende-, Empfangs- und Auswerte-Elektronik, sowie eine Vorrichtung zur Messung von Abgas-Strömungen von Verbrennungskraftmaschinen, sowie ein Verfahren zur Ermittlung des Durchflusses von Gasen, wobei die mittlere Strömungsgeschwindigkeit und daraus die strömende Gasmenge aus der Laufzeit von zwei Schallsignalen zwischen Sender und Empfänger mit hoher zeitlicher Auflösung ermittelt wird.

Solche Ultraschall-Durchflusssensoren sind bekannt für Flüssigkeiten und Gase und sind Thema verschiedener Bücher und Fachartikel. Sie nutzen den sogenannten Mitführeffekt, nämlich dass Geschwindigkeit und Richtung der Ausbreitung von Schallsignalen in Fluiden nicht nur durch die Orientierung des Schallsenders und die Schallgeschwindigkeit des (ruhenden) Mediums bestimmt sind, sondern abhängig sind unter anderem auch von der Strömungsgeschwindigkeit des fluidischen Mediums. Gemessen werden mindestens zwei Laufzeiten entlang von mindestens zwei Messpfaden, wovon mindestens einer parallel oder schräg zur Strömungsrichtung, stromaufwärts oder stromabwärts, gerichtet sein muss. Der Verlauf relativ zu dem oder den anderen Messpfaden kann gekreuzt, parallel-verschoben oder auch parallel-deckungsgleich sein.

Die mindestens zwei Laufzeiten der gesendeten Schallmerkmale im Bereich des strömenden Mediums werden aus den mindestens zwei gemessenen Zeitdifferenzen zwischen Sendezeitpunkt und Empfangszeitpunkt der Schallmerkmale bestimmt. Aus den Laufzeiten kann eine mittlere Strömungsgeschwindigkeit ermittelt werden, die mit der bekannten Querschnittfläche des durchströmten Rohres die gesuchte Volumsströmung ergibt. Der Massenstrom des strömenden Gases kann aus dem Volumenstrom berechnet werden, wenn die Dichte des Gases bekannt ist. Diese ist aber, insbesondere bei einer pulsierenden Gasströmung mit überlagerten Druckpulsationen und starken Temperaturschwankungen, im Allgemeinen nicht bekannt. Eine Möglichkeit ist es nun, aus den mindestens zwei Laufzeiten der gesendeten Schallmerkmale auch die effektive Ausbreitungsgeschwindigkeit des Schalls, das ist näherungsweise die Schallgeschwindigkeit des ruhenden Gases, zu bestimmen und gleichzeitig zur Messung der Laufzeiten auch den aktuellen Gasdruck und eventuell zusätzlich die aktuelle Gastemperatur zu messen und bei der Auswertung zu berücksichtigen.

Dieses bekannte Verfahren besitzt aber derzeit eine nur beschränkte Anwendbarkeit. Denn den bekannten Gleichungen für das ideale Gas zufolge ist für eine genaue Bestimmung des Gasmassenstroms zusätzlich entweder die Kenntnis des Adiabatenkoeffizienten des Gases, das ist das Verhältnis der spezifischen Wärmekapazität bei konstantem Druck zu der bei konstantem Volumen, oder die Kenntnis der molaren Masse nötig. Diese Werte sind jedoch nicht immer bekannt und beispielsweise bei einem Abgas aus einer variabel geführten Verbrennung auch nicht konstant über der Zeit.

Die aus den Laufzeiten erhaltenen Werte der mittleren Strömungsgeschwindigkeit und Schallgeschwindigkeit sind außerdem abhängig vom zeitlichen und räumlichen Verlauf der Strömung in dem Volumen, das von den Schallwegen überstrichen wird. Sie stellen jeweils einen über den Schallweg und die Laufzeit gemittelten Wert dar, während für die Bestimmung der strömenden Gasmenge die über die Querschnittfläche des Rohres gemittelte Strömungsgeschwindigkeit maßgeblich ist. Da diese beiden Mittelungen im Allgemeinen nicht das gleiche Resultat ergeben, wurden aufwendige Systeme erdacht, um den Einfluss des Strömungsprofils auf die Schallwege und auf die aus den Laufzeiten ermittelten Werte für die Strömungs- und Schallgeschwindigkeit zu minimieren. Beispielsweise wurde vorgeschlagen, mehrere Ultraschallwandler so zu positionieren, dass die aus den Laufzeiten ermittelte Strömungsgeschwindigkeit bereits der über die Rohrquerschnittsfläche gemittelten Geschwindigkeit entspricht. Weiters wurden insbesondere für große Rohrquerschnitte spezielle Schallwege im Nahbereich der Rohrwand vorgeschlagen. Es sollte also durch eine geeignete, aber aufwendige Anordnung und Auswertung mehrerer Schallwandler und Schallwege sichergestellt werden, dass die aus den Laufzeiten ermittelte Strömungsgeschwindigkeit der über den Rohrquerschnitt gemittelten Geschwindigkeit entspricht.

Weiters ist bekannt, dass zur Berücksichtigung des im Medium vorliegenden Strömungsprofils eine Fehlerkorrektur in Form einer Kalibrierkonstante vorgenommen werden kann, was allerdings nur bei einer zeitlich konstanten Strömungscharakteristik sinnvoll ist, nicht aber bei einer instationären und pulsierenden Strömung.

Ein Nachteil der bekannten Vorrichtungen und Verfahren besteht insbesondere auch darin, dass sie häufig und fälschlicherweise von einem geradlinigen Verlauf des Schallwegs im durchströmten Rohr ausgehen.

Zwar haben bekanntermaßen die azimutalen Strömungen im Messrohr einen großen Einfluss auf den jeweiligen Schallweg und damit auf die Messergebnisse eines Ultraschall-Gasdurchflusssensors. Zur Abhilfe gegen solche Drallgeschwindigkeiten werden daher strömungsformende Einbauten im Messrohr empfohlen, beispielsweise Strömungsgleichrichter oder Laminarisierer in Form von Lamellen oder dünnen Rohren.

Im Allgemeinen wird aber nicht berücksichtigt, dass neben einer differenzierten Verwehung des Schalls auch eine Schallbrechung infolge eines axialen Strömungsprofils stattfindet. Vom Wert Null an der Schallwandlermembrane und angenähert auch noch in der Tasche vor dem schräg ans Messrohr angebauten Wandler hat die Strömungsgeschwindigkeit einen glatten Verlauf bis zur Maximalgeschwindigkeit etwa in der Mitte des Rohres, und über die Abhängigkeit der lokalen Schallgeschwindigkeit von der Strömungsgeschwindigkeit ergibt sich ein Verlauf der lokalen Schallimpedanz, deren Gradient die Brechung verursacht. Von besonderer Bedeutung ist die im Stand der Technik ebenfalls nicht berücksichtigte zusätzliche Brechung infolge eines Temperaturprofils im strömenden Gas. Insbesondere bei einer Temperaturdifferenz zwischen Messrohr und Medium kann es zu einem von der geradlinigen Ausbreitung der Schallwelle stark abweichenden Schallweg kommen.

Im Extremfall kann es vorkommen, dass bei fluchtender Ausrichtung von Sender und Empfänger der vom Sender emittierte Schall so stark verweht und gebrochen wird, dass er überhaupt nicht mehr auf den Empfänger trifft und somit eine Messung der Laufzeit nicht mehr möglich ist. Dieser Fall kann beispielsweise bei der Abgasmengenmessung an Verbrennungskraftmaschinen beobachtet werden. Bei einem plötzlichen Lastwechsel vom Leerlauf zur Volllast kann es zu hohen Strömungsgeschwindigkeiten und zu Temperaturdifferenzen von beispielsweise 300°C zwischen strömendem Abgas und Rohr kommen, was zur Ausbildung von extremen Strömungs- und Temperaturprofilen und zur Ablenkung des Schalles von der geradlinigen Ausbreitung, abhängig von der Rohrdimension, von bis zu einigen cm führen kann.

Verwehung und Brechung des Schalls an der instationären Gasströmung mit instationärem Temperaturprofil bewirken also, dass am Empfänger nur mehr ein von der momentanen Strömungscharakteristik abhängiger Teil der maximal detektierbaren Amplitude eintrifft und gemessen wird. Darüber hinaus kann aufgrund lokaler Verwirbelungen und Druckschwankungen bis hin zu Kavitationseffekten die Schallübertragung extrem verzerrt und gedämpft werden. Diese stark schwankenden Störungen führen zu einer starken Beeinflussung der Amplitude und Signalform der beiden Empfangssignale, woraus hohe Anforderungen an das Auswerteverfahren, an die Schallwandler und an die gesamte Anordnung resultieren. Infolge dieser Effekte wird der nutzbare Messbereich des Durchflusssensors deutlich beschränkt und die Datenauswertung erschwert. Weiters stellt der Einsatz des Durchflusssensors an einem Motorprüfstand eine bezüglich EMV (elektromagnetische Verträglichkeit) problematische Umgebung für die Sensorelektronik dar. Herkömmliche Systeme und Auswerteverfahren, z.B. die Kreuzkorrelation mit einem abgespeicherten Referenzsignal (EP 0 797 105 A2), oder auch Verfahren, welche Schwellwertabfragen verwenden (DE 196 36 945 A1), können all diesen Anforderungen nicht genügen.

Die zu messenden Strömungsgeschwindigkeiten im Abgasrohr können einen großen Wertebereich umfassen, vor allem wenn unabhängig von der Motorgröße die in Abgassträngen üblichen Normdurchmesser für das Messrohr zu verwenden sind. Bezüglich der Maximierung des Messbereichs gibt es zwar Vorschläge, welche eine spezielle mechanische Ausrichtung der Wandler mit einem entsprechenden Vorhaltewinkel vorsehen. (K.S.Mylvaganam, "High-Rangeability Ultrasonic Gas Flowmeter for Monitoring Flare Gas," IEEE Transactions on Ultrasonics, Ferroelectrics and Frequency Control, vol. 36, pp. 144-149, 1989.) Dies erfordert jedoch einen höheren fertigungstechnischen Aufwand für das Messrohr und ermöglicht keine ständige Anpassung an verschiedene Strömungsgeschwindigkeiten und verschiedenen Temperaturprofile.

Die Abgastemperaturen können je nach Betriebszustand der Verbrennungskraftmaschine und Position des Durchflusssensors im Abgasstrang von -40°C (z.B. beim Kaltstart des Motors in der Klimakammer) bis etwa 1000°C betragen. Bisherige Geräte (von z.B.: Sick AG) sind bzgl. der maximal zulässigen Abgastemperatur (200°C) wegen der Verwendung von piezokeramischen Ultraschallwandlern stark eingeschränkt.

Entscheidend ist auch die Tatsache, dass die Abgastemperatur einer Verbrennungskraftmaschine sich schnell und stark ändern kann, z.B. beim Lastwechsel vom Motorbetrieb bei Volllast in den Schleppbetrieb. Aufgrund dieser großen und schnellen Änderungen der Strömungscharakteristik kann es auch zu unvorhersehbaren Reflexionen und Überlagerungen des eigentlichen Empfangssignal mit parasitären Schallsignalen kommen, was bei Verwendung von herkömmlichen Auswertemethoden zu falschen Ergebnissen führen würde. Bekannte Ultraschall-Gasdurchflusssensoren haben Schwierigkeiten, die bei Abgasströmungen in hohem Maß vorhandenen Pulsationen von Druck und Strömungsgeschwindigkeit ausreichend genau zu erfassen. Aufgrund des Abtast-Theorems ist es nämlich zur Vermeidung von Messartefakten (Aliasing) erforderlich, das zu messende Signal so hochfrequent abzutasten, dass die Abtastfrequenz mindestens zwei mal so hoch ist wie die Frequenz der höchstfrequenten im Signal vorhandenen Signalkomponente. Daher muss ein Abgasmengensensor auch eine entsprechend hohe Messwiederholrate haben. Beispielsweise ist für PKW-Motoren von einer Repetitionsfrequenz von mindestens 3 kHz je nach Position des Massenflusssensors im Abgasstrang auszugehen. Am Markt befindliche Geräte (z.B. Sick AG) arbeiten mit Messwiederholfrequenzen von maximal 30 Hz.

Aufgrund der im Abgasrohr herrschenden besonderen Bedingungen sollte das im Abgasmengensensor verwendete Auswerteverfahren weiters über eine adäquate Möglichkeit einer Plausibilitätskontrolle der ermittelten Durchflusswerte verfügen. Eine grundsätzliche Verbesserung bei Ultraschall-Durchflusssensoren für Gase stellt der Einsatz von kapazitiven Ultraschallwandlern dar, wie er ganz allgemein bereits vorgeschlagen wurde (I.J.O'Sullivan and W.M. D.Wright, "Ultrasonic measurement of gas flow using electrostatic transducers," *Elsevier Ultrasonics*, vol. 40, pp. 407-411, 2002.) Jedoch ist nicht bekannt, wie die Vielzahl der oben genannten Probleme gelöst werden könnten. Insbesondere sind keine für die Anwendung am Abgasstrang einer Verbrennungskraftmaschine geeigneten Auswerteverfahren, Wandler und Anordnungen bekannt geworden.

Eine allgemeine Schwierigkeit bei Ultraschallsende- und -empfangswandlern für Gase ist es, genügend Schallenergie ins Medium senden und aus der empfangenen Schallenergie ein ausreichend starkes elektrisches Empfangssignal gewinnen zu können. Bisher wurden als Wandler praktisch ausschließlich piezoelektrische Ultraschallwandler eingesetzt, die durch eine kompakte Struktur aus Festkörpermaterial ausgezeichnet sind. Dabei wirkt sich der große Unterschied im Schallwellenwiderstand von Gasmedium einerseits und Schallwandlermaterial andererseits störend aus, da Festkörper einen etwa 100.000-fach höheren spezifischen Wellenwiderstand als Gase besitzen. Das bedeutet, dass die meiste Schallenergie an der Grenzfläche vom Wandler zum Gasmedium reflektiert und nur ein geringer Anteil transmittiert wird. In großen Frequenzbereichen besitzen daher diese Wandler eine extrem geringe Empfindlichkeit, sowohl zum Senden wie zum Empfangen.

Dieselbe Eigenschaft hat zur Folge, dass die piezoelektrischen Schallwandler recht gut als festkörperakustische Resonatoren mit charakteristischer Eigenfrequenz und relativ hoher Schwinggüte, bzw. mit einer schmalbandigen Frequenzcharakteristik, zu beschreiben sind. Diese Tatsache wird auch gezielt genutzt, um eine ausreichend hohe Empfindlichkeit zu erreichen: Im Bereich ihrer Eigenfrequenz oder Resonanzfrequenz ergibt sich nämlich aufgrund der Resonanzüberhöhung eine akzeptabel hohe Empfindlichkeit, obwohl abseits dieses schmalbandigen Frequenzbereichs die Empfindlichkeit auf weitgehend unbrauchbar geringe Werte absinkt. Mit der Frequenzcharakteristik eines Resonators hoher Güte verbunden ist naturgemäß auch ein langes Einschwing- und Ausschwingverhalten der Wandler, was wiederum Schwierigkeiten bei der genauen Laufzeitmessung macht und daher zu Ungenauigkeiten und geringen Abtastraten bei der Durchflussmessung führt.

Zur Verbesserung der Situation sind verschiedene Ansätze bekannt geworden. Man hat versucht, das Rückseitenecho im piezoelektrischen Wandler durch schallabsorbierende Schichten, sogenannte "Backing"-Schichten, zu bedämpfen und so die Bandbreite etwas zu erhöhen - allerdings auf Kosten der Empfindlichkeit. Auch an der Frontseite der Wandler wurden Schichten zur sogenannten Impedanzanpassung an den Wellenwiderstand des Gasmediums angeordnet, mit mäßigem Erfolg. Das Wandlerelement selbst hat man auch als Composit gestaltet, indem z.B. piezoelektrische Stäbchen in eine Kunststoff-Polymer-Matrix eingebettet werden, sodass der Wellenwiderstand dieses Verbundelementes abgesenkt und gleichzeitig saubere Schwingungsmoden erreicht werden. Man hat signalanalytische Verfahren entwickelt, um trotz langer Ein- und Ausschwingvorgänge genaue Laufzeitmessungen zu erreichen. Trotz aller Bemühungen aber blieb die Leistungsfähigkeit der Ultraschall-Durchflussmessung wesentlich durch die Schmalbandigkeit der eingesetzten Schallwandler, insbesondere der piezoelektrischen Ultraschallwandler, begrenzt.

Ein weiterer Nachteil dieser Wandler besteht in ihrer begrenzten Temperaturbeständigkeit. Piezoelektrische Materialen mit einer hohen piezoelektrischen Empfindlichkeit, zum Beispiel die üblicherweise eingesetzten PZT-Piezokeramiken, verlieren ihre piezoelektrischen Eigenschaften bei der sogenannten Curie-Temperatur, die je nach Material Werte von etwa 250° bis 350°C hat. Und bekannte piezoelektrische Materialien mit höherer Temperaturbeständigkeit besitzen eine für den Einsatz als Schallwandler wenig zufriedenstellende Empfindlichkeit.

Auch herkömmliche kapazitive Ultraschallwandler besitzen nicht die gewünschte Temperaturbeständigkeit. Ihre über ein elektrisch leitendes Substrat gespannte metallisch beschichtete Membrane bildet gleichzeitig die Isolationsschicht der elektrischen Kapazität, wobei die als dielektrisches Membranematerial üblicherweise verwendeten Kunststofffolien, oder auch Siliziumnitrid, den Temperaturanforderungen der Abgasmengenmessung nicht genügen können. (D.A.Hutchins, D.W.Schindel, A.G.Bashford, and W.M.D.Wright, "Advances in ultrasonic electrostatic transduction," *Elsevier Ultrasonics*, vol. 36, 1998.) Auch die sogenannten Elektret-Wandler, die eine dauerhaft polarisierte dielektrische Membrane besitzen, beispielsweise eine teflonartige Polymer-Membrane mit eingebrachten elektrischen Ladungsträgern (Elektronen), sind nicht genügend temperaturbeständig.

Ein besonderer Nachteil bei herkömmlichen Ultraschall-Durchflusssensoren mit schräger Durchschallung ist die bei üblichen Wandlern erforderliche Schrägstellung der Wandler zur Rohrwand. Dadurch entstehende Ausnehmungen oder Taschen verursachen eine Vorlaufzeit der Ultraschallwelle, die bei der Auswertung der Laufzeiten berücksichtigt werden müsste. Darüber hinaus werden Strömungswirbel in den Ausnehmungen und in der Strömung induziert, die eine Verfälschung der Messwerte bewirken können. Außerdem verstärken die Wirbel das Problem der Ablagerung von mit der Strömung transportierten Partikeln. Partikel, die sich auf der Wandlermembrane ablagern, können die Übertragungseigenschaften der Wandler gravierend verändern. Die bekannt gewordenen Vorschläge zur Abhilfe, beispielsweise ein über die Ausnehmung gespanntes Gitternetz, das für den Ultraschall durchlässig und für die Strömung undurchlässig sein soll, oder die Bespülung der Ausnehmung mit Frischluft, konnten das Problem jedoch nicht zufriedenstellend lösen.

Die Verwendung von kapazitiven Ultraschallwandlern bringt nicht nur Vorteile. Schaltungstechnische Verbesserungen wären erwünscht in Bezug auf die Polarisationsspannung, die den elektrischen und mechanischen Betriebspunkt des Wandlers wesentlich mitbestimmt. Die erforderliche Polarisationsspannung von beispielsweise 100 bis 200 Volt wird üblicherweise über einen hochohmigen elektrischen Widerstand an die Wandlerkapazität angelegt. Die resultierende elektrostatische Kraft bewirkt einerseits ein glattes Aufliegen der Membranfolie auf der strukturierten Rückplatte und andererseits eine lineare Wandlercharakteristik, also eine von der Amplitude des elektrischen Sendesignals oder akustischen Empfangssignals annähernd unabhängige Wandlerempfindlichkeit. Aber die Polarisationsspannung verhindert auch die einfache Anwendung der bei üblichen piezokeramischen Wandlern oder Elektretwandlern bevorzugten Schaltungskonzepte, nämlich direkt auf Massepotential bezogene Elektrometer- oder Ladungsverstärker.

Als Empfangsverstärker wären bezüglich des erreichbaren SNR (engl.: Signal-to-Noise-Ratio, dt.: Signal-Rauschverhältnis) der Ladungsverstärker und Elektrometerverstärker beide vorteilhaft und annähernd gleichwertig. Aber im Gegensatz zur Elektrometerschaltung ermöglicht der Ladungsverstärker eine höhere Bandbreite, die besonders bei hochfrequenten Anwendungen wie optische Datenübertragung mit Photodioden oder Ultraschall vorteilhaft zu nützen ist. Die hohe Bandbreite resultiert aus der Tatsache, dass die parasitären Kapazitäten des Wandlers und des Verbindungskabels beim Ladungsverstärker-Konzept nicht mit der Signalspannung umgeladen werden müssen. Der Operationsverstärker erzeugt nämlich an seinem invertierenden Eingang einen virtuellen Spannungs-Nullpunkt, sodass die Spannung am Wandler und an den vorhandenen parasitären Komponenten verschwindend klein bleibt.

Durch die bei den kapazitiven Ultraschallwandlern notwendige elektrische Polarisationsspannung ist aber ein Ladungsverstärker in der üblichen Form nicht möglich. In einer Kompromisslösung wurde bisher der elektrisch vorgespannte Wandler mit dem gegen Massepotential arbeitenden Ladungsverstärker durch einen spannungsfesten Koppelkondensator gekoppelt. Dadurch aber ist ein "reiner" Ladungsverstärkerbetrieb des kapazitiven Ultraschallwandlers mit all seinen Vorteilen nicht mehr möglich. Der Wandler liegt nicht mehr direkt am virtuellen Nullpunkt des Operationsverstärkers, was die erreichbare Bandbreite reduziert. Ein sehr großer Koppelkondensator würde den Wandler zu stark belasten, aber bei einem knapp dimensionierten Wandler wäre aufgrund von fertigungsbedingten Schwankungen der Wandlerkapazität die Gesamtempfindlichkeit von Wandler + Verstärker, bzw. deren Gruppenlaufzeiten, zu wenig definiert. Im Fall der Ultraschall-Durchflussmessung mittels Laufzeitbestimmung an zwei Empfangskanälen müssten in der Folge jeweils zwei Verstärker kalibriert werden, da jede Unsymmetrie aufgrund der Gruppenlaufzeiten direkt zu einem Zeitfehler führt, was als äußerst problematisch zu beurteilen ist. Das gleiche gilt für das Verbindungskabel, da eine komplette Symmetrierung der beiden Verbindungskabel in einer endgültigen Gerätekonfiguration schwierig und aufwendig ist.

Als denkbare Alternative dazu wäre noch die elektrische Impedanzwandlung direkt beim Wandler im Gehäuse zu nennen. Diese ist aber des Platzmangels wegen und in Anbetracht der hohen Temperaturen der zu messenden Verbrennungsgase auszuscheiden.

Die oben beschriebenen Nachteile des Stands der Technik sind von besonderer Bedeutung bei der Messung von Abgas-Strömungen von Verbrennungskraftmaschinen und können die Realisierung von vorteilhaften messtechnischen Vorrichtungen mit Gasdurchflusssensoren im Abgasstrang (vgl. z.B. WO 02/42730 A2 zur PCT/AT01/00371) verhindern, insbesondere im heißen und stark pulsierenden Bereich. Mit den verfügbaren Gasdurchflusssensoren können zwar einzelne Anwendungen der motorischen Messtechnik, wie beispielsweise die Messung des Blow-By Gases (Leckgas aus dem Kurbelgehäuse einer Verbrennungskraftmaschine) abgedeckt werden, jedoch sind den möglichen Anwendungen insbesondere zur Abgasanalyse am Motor- und Antriebstrangprüfstand sowie am Fahrzeug-Rollenprüfstand oder im Fahrzeug auf der Strasse enge Grenzen gesetzt.

<u>Aufgabe der vorliegenden Erfindung</u> ist es, die genannten Schwierigkeiten zu überwinden und einen Ultraschall-Gasdurchflusssensor mit wesentlich verbesserter Leistungsfähigkeit, insbesonders punkto Temperaturfestigkeit und der Reduzierung und Berücksichtigung eines vorhandenen Temperaturprofils, anzugeben.

Eine weitere Aufgabe der Erfindung ist eine Verbesserung des Auswerteverfahrens zur genaueren und zuverlässigeren Ermittlung des Volumsstromes bzw. Massenstroms von Gasen, insbesondere in hochdynamischen Strömungen.

Diese Aufgabe wird erfindungsgemäß dadurch gelöst, dass die Schallwandler zur Schallgenerierung sowie zum Empfang der zeitlich transienten Schallsignale als kapazitive Ultraschallwandler ausgeführt sind und Einrichtungen zur Vergleichmäßigung des Gastemperaturprofils der Strömung und zur Minimierung des Einflusses des Temperaturprofils auf die Strömungsmessung vorgesehen sind.

Um die für viele Anwendungen benötigte hochtemperaturfeste Ausführungsform zu erhalten, wird erfindungsgemäß anstatt der sonst üblichen hochelastischen und zumeist einseitig metallisch beschichteten isolierenden Membranfolien eine Metallmembran, beispielsweise aus Titanwerkstoff, verwendet.

Die durchgängige elektrische Leitfähigkeit des Membranematerials erschwert allerdings den Aufbau des kapazitiven Wandlers. Statt wie üblich einfach ein elektrisch leitfähiges Material für die zweite Elektrode des Kondensators, der den Wandler bildet, vorzusehen, ist es notwendig, für eine Isolationsschicht besonders zu sorgen. Dazu kann eine Elektrode bzw. Rückplatte mit darauf befindlicher Isolationsschicht dienen, die vorteilhafterweise aus einem dotierten Halbleiter und einer darüberliegenden Isolierschicht besteht, die beispielsweise aufgebracht ist und auf welcher die Membran vorzugsweise unmittelbar aufliegt.

Dabei ist darauf zu achten, dass die Isolationsschicht bezüglich ihres thermischen Ausdehnungskoeffizienten auf das Grundmaterials der Rückplatte (dotierter Halbleiter) abgestimmt ist. Daher ist es besonders vorteilhaft, wenn die Isolierschicht durch ein Material gebildet ist, das durch Reaktion des Materials der zweiten Elektrode bzw. Rückplatte unter Wärmeeinwirkung mit der umgebenden Atmosphäre während des Herstellungsprozesses entstanden ist. So kann beispielsweise ein hochdotiertes Silizium Grundmaterial in Sauerstoffatmosphäre bei etwa 1000 °C für ca.

24 h in einem Ofen behandelt werden. Dabei entsteht eine Siliziumoxidschicht von ca. 1.5 μm, die den geforderten Isolationsansprüchen gerecht wird. Gegenüber mittels Sputtern oder CVD-Technik aufgebrachten Schichten weisen derartig aus dem Material "herausgewachsene" Schichten eine bedeutend höhere thermische und mechanische Belastbarkeit auf.

Das Frequenzverhalten, d.h. die Empfindlichkeit des derartig aufgebauten Hochtemperatur-Ultraschallwandler kann mittels Resonanzvolumina, die zwischen der Isolationsschicht und der darauf direkt aufliegenden Membran entstehen, beeinflusst werden. Dazu ist die zweite Elektrode bzw. Rückplatte mit einer Strukturierung versehen, wobei etwa die aufgrund der natürlichen Oberflächenrauhigkeit entstehenden Lufteinschlüsse dienen können.

Gemäß einer anderen Ausführungsform ist vorgesehen, dass die zweite Elektrode bzw. Rückplatte mit einer Strukturierung aus diskreten, künstlichen Strukturen versehen ist, vorzugsweise geätzten Strukturen. Dabei haben sich linienförmige oder wabenförmige Strukturen mit einer charakteristischen Breite von 80 bis 120 μm für einen interessierenden Frequenzbereich von 100 bis 600 kHz als besonders vorteilhaft erwiesen. Weiters besteht eine direkte Abhängigkeit zwischen Strukturtiefe und Empfindlichkeit des Ultraschallwandlers. Mit Strukturtiefen von ca. 0.4 μm können für die geforderten Anwendungen besonders gute Ergebnisse erzielt werden. Zu bemerken ist, dass die Strukturen dabei sowohl vor der Herstellung der Isolationsschicht auf der rohen Rückplatte hergestellt werden können als auch nach der Herstellung der Isolationsschicht. Das heißt sowohl in den dotierten Halbleiter als auch in der Isolationsschicht. Wobei eine Strukturierung nach dem Herstellen der Isolation zu bevorzugen ist, weil sich in diesem Fall zwischen den nicht strukturierten Bereichen (Stege) der Rückplatte und der Membran ein größerer Abstand zwischen den geladenen Elektroden einstellt und damit die statische Kapazität des Wandlers kleiner ist, als wenn die Isolationsschicht nach der Strukturierung erfolgt. Die Herstellung der verhältnismäßig kleinen Strukturen erfolgt erfindungsgemäß mittels chemischer Ätzverfahren unter Anwendung herkömmlicher Methoden der Lithographie. Das heißt es wird die gesamte Rückplatte zunächst mittels eines lichtempfindlichen Lacks (zumeist unter Zuhilfenahme eines Spinners) beschichtet und sodann entsprechend der Herstellvorschrift des Lackherstellers unter Zuhilfenahme einer Belichtungsmaske belichtet. Durch die Entwicklung des Lackes im Entwicklungsbad werden, je nach Lack, entweder die belichteten oder die nicht belichteten Oberflächen des Lackes freigelegt. In einem Ätzbad können sodann die Strukturen an den freigelegten Flächen tiefengeätzt werden. Die Ätztiefe kann dabei durch die Ätzzeit festgelegt werden.

Vorteilhafterweise weist der Wandler mehrere, separat ansteuerbare bzw. auslesbare Bereiche in linearer oder flächiger Anordnung auf. Damit ist die Vermeidung der Sacklöcher für die Wandleraufnahme möglich, die eine zusätzliche Verwirbelung der Strömung im Bereich der Ultraschall-Laufwege erzeugen können. Vorzugsweise werden diese sogenannten "Arraywandler" mittels der oben beschriebenen Technologien hergestellt. Sie weisen den Vorteil auf, eine winkelig zu ihrer Oberfläche gerichtete Charakteristik für die Schallabstrahlung, bzw. für den Schallempfang, zu ermöglichen. Dadurch ist ein wandbündiger Einbau der Ultraschallwandler in das Messrohr auch bei schräger Durchschallung des Rohres möglich. Die einzelnen Bereiche des Arraywandlers werden bei Verwendung als Sender in zeitlich diskreten Abständen mit dem elektrischen Sendesignal angesteuert. Bei Verwendung als Empfänger werden die einzelnen Empfangssignale zeitlich verschoben ausgewertet. In beiden Betriebsarten kann durch Variation der zeitlichen Abstände die Winkelcharakteristik des Wandlers beeinflusst und damit vorteilhafterweise Verwehungs- sowie Brechungsphänomenen entgegengewirkt werden.

Der Aufbau eines derartigen Wandlers erfolgt ähnlich der oben beschriebenen Vorgangsweise: Auf ein isolierendes hochtemperaturfestes Material (Substrat), beispielsweise Aluminiumoxid ($AL_2O_3$) oder Saphir wird mittels Sputtern oder Aufdampfen eine gleichmäßige Struktur von Elektroden aus z.B. Platin hergestellt. So wird z.B. für eine ebene und winkelige Sende- bzw. Empfangscharakteristik in einem Frequenzbereich von etwa 100 - 600 kHz eine Streifenstruktur von Streifen der Breite 1 mm in einem Abstand von 0.5 mm auf das Substrat aufgebracht. In einem zweiten Schritt wird auf die Oberfläche eine Isolationsschicht derart aufgebracht, dass eine separate Ansteuerbarkeit der einzelnen Elektrodenstreifen mittels Kontaktierung möglich ist. Die Isolationsschicht wird sodann, wie oben beschrieben, mittels Lithographie und Ätztechnik strukturiert. Auf dieser Struktur liegt dann - wie bei einem herkömmlichen kapazitiven Ultraschallwandler durch das Wandlergehäuse gehalten - die metallische Membran auf. Mittels des durch einen derartigen Wandler realisierten einstellbaren Abstrahlwinkels kann den Effekten der Schallbrechung und -verwehung durch das Temperatur bzw. des Strömungsprofils entgegengewirkt werden.

Eine weitere Möglichkeit den oben genannten Effekten entgegenzuwirken ist es, den Abstand zwischen Sender und Empfänger in Strömungsrichtung variierbar zu gestalten. Dies ist etwa gemäß einer erfindungsgemäßen Ausführungsform dadurch erreichbar, dass zumindest ein Schallwandler, vorzugsweise der (die) Empfangswandler, verschiebbar gelagert sind. So kann beispielsweise bei einer Strömungsgeschwindigkeit von 30 m/s, die bei einem Rohrdurchmesser von 50 mm eine Verwehung von etwa 10 mm stromabwärts zur Folge hat, der Empfangswandler um genau diese Distanz verschoben werden um dadurch das gleiche Übertragungsverhalten wie ohne Strömung zu gewährleisten.

Ähnlich erfolgreich führt eine drehbare Lagerung eines oder mehrerer Wandler dazu, dass man einen entsprechenden Vorhaltewinkel bei der Schallabstrahlung derart vorsehen kann, dass die Schallkeule des Senders auch bei hoher Strömungsgeschwindigkeit oder bei hoher Temperaturdifferenz zwischen Rohrwand und strömendem Gas mit ihrem maximalen Schallpegel direkt auf die Empfängeroberfläche auftrifft. Dazu wird der Wandler derart gelagert angebracht, dass durch das Drehen des Wandlers der Ein- bzw. Austrittswinkel des Schallstrahles relativ zur Rohrachse geändert werden kann.

Weiters wird erfindungsgemäß eine hohe Temperaturdifferenz zwischen Rohrwand und strömendem Gas mittels einer Heizeinrichtung für die Wand des Messrohres, allenfalls auch für die Schallwandler, verringert oder vermieden. Dazu ist es vorgesehen, mittels bekannten Regelmechanismen die Rohrtemperatur möglichst der aktuellen Temperatur des strömenden Gases anzupassen.

Dazu ist es besonders empfehlenswert, das Messrohr aus einem Material mit geringer spezifische Wärmekapazität, insbesonders aus thermisch isolierendem Material, anzufertigen und/oder mit einer Beschichtung aus derartigem Material zu versehen und/oder mit einer Umhüllung aus derartigem Material zu umgeben. Dies führt im Idealfall dazu, dass die Temperatur der messgasseitigen Rohrwand immer selbständig der Gastemperatur folgt - dies mit keinem oder mit nur geringem Heizaufwand.

Zusätzlich ist es vorteilhaft, für zeitlich hoch transiente Vorgänge, wie sie beispielsweise bei Abgasen von Verbrennungsmotoren bei Lastwechsel vorkommen, temperatur-und/oder strömungsprofilformende Einbauten im Messrohr zu installieren bzw. zu integrieren. Diese führen zu einer Vergleichmäßigung des Temperatur- sowie des Strömungsprofils. So sind erfindungsgemäß Gitter und Abschnitte von Rohrbündeln, wie sie sonst zur Laminarisierung von Strömungen verwendet werden, vorgesehen, um einerseits eine möglichst gleichmäßige Durchmischung der im Allgemeinen turbulenten Strömung und damit der Gastemperatur zu gewährleisten und andererseits ein gleichmäßiges und drallfreies Strömungsprofil zu erhalten. Um das Ablösen der Temperaturgrenzschicht im Bereich der für die Wandleraufnahme vorgesehenen Sacklöcher zu verhindern, sind weiters die Schallausbreitung nicht behindernde und mit dem Messrohr beheizbare Gitter vorgesehen, die die Sacklöcher bündig in Fortsetzung der Rohrwand verschließen.

Neben den rein mechanischen Maßnahmen, das Temperaturprofil des strömenden Gases zu minimieren, hat es sich als besonders vorteilhaft erwiesen, zusätzliche rechnerische Korrekturen an den Ergebnissen der Strömungsmessung in Abhängigkeit zusätzlicher physikalischer Parameter anzubringen. So kann gezeigt werden, dass die durch das Temperaturprofil hervorgerufene Änderungen des Schallwegs mittels eines zusätzlichen Korrekturfaktors in der Auswertung der Strömungs- und Schallgeschwindigkeitsberechnungen berücksichtigt werden können. Dabei hat es sich als besonders vorteilhaft erwiesen, diesen Korrekturfaktor in Abhängigkeit der Rohrtemperatur und einer charakteristischen Temperatur des Gases zu verändern. Dazu ist erfindungsgemäß ein Temperatursensor für die Messung der Temperatur der Wand des Messrohres vorgesehen und mit der Auswerteelektronik verbunden.

In einer weiteren Ausformung der erfindungsgemäßen Vorrichtung ist ein weiterer Temperatursensor für die Messung der Temperatur der Strömung vorgesehen und mit der Auswerteelektronik verbunden.

Des weiteren zeigt sich eine nicht zu vernachlässigende Abhängigkeit des Messergebnisses des Gasdurchflusssensors von der Gaszusammensetzung, insbesondere, wenn als Messergebnis der Massenfluss oder eine auf eine bestimmte Temperatur normierte Angabe über den Volumendurchfluss generiert werden soll. Daher ist erfindungsgemäß eine Einrichtung zur Ermittlung der Gaszusammensetzung vorgesehen, insbesonders eine Lambda-Sonde zur Bestimmung der sogenannten Luftzahl λ. Speziell bei der Messung des Abgas-Massenstroms auf Prüfständen erweist es sich als besonders vorteilhaft, die Gaszusammensetzung, die parametrisch von der Luftzahl λ abhängt, mittels einer Lambdasonde zu ermitteln.

Dabei kann die Berücksichtigung der Gaszusammensetzung sowohl direkt bei der Auswertung des Durchflusses erfolgen (d.h. unabhängig vom eigentlichen Durchflusssensor) als auch - wie erfindungsgemäß vorgesehen - in der Auswerteelektronik des Durchflusssensors selber. Dazu ist eine entsprechende Datenleitung und -schnittstelle vorgesehen, über die Informationen über die Gaszusammensetzung übermittelt werden.

Für eine korrekte und hochdynamische Auswertung des Durchflusses mittels Ultraschall sind in erster Linie möglichst ungestörte Primärsignale eines großen Signal-Rauschabstandes nötig. Dafür sind die kapazitiven Wandler und die analoge Primärverarbeitung der Signale verantwortlich. Um die genannten Probleme bezüglich Asymmetrie und Bandbreite bei den Verstärkerschaltungen herkömmlicher Art für kapazitive Ultraschallwandler zu vermeiden, ist erfindungsgemäß die Empfangselektronik als analoger Verstärker aufgebaut und ist das Bezugspotential zumindest der primären Verstärkerstufe auf das Potentialniveau des Wandlers, d.h. auf Bias-Spannung, gehoben. Dadurch können herkömmlicherweise verwendete Koppelkondensatoren vermieden werden, die die Übertragungsbandbreite der Signaldetektion Wandler Verstärker bedeutend herabsetzen und andererseits den Ultraschallwandler kapazitiv belasten würden. Dabei stellt der Koppelkondensator unter Berücksichtigung des virtuellen Nullpunktes am Eingang der Verstärkerschaltung eine zum Wandler parallel liegende kapazitive Last dar.

In einer weiteren besonders vorteilhaften Ausführung ist es vorgesehen, dass der invertierende Eingang der Verstärkerschaltung direkt mit dem kapazitiven Wandler verbunden ist.

Zum Schutz des Verstärkers beim Auftreten eines Durchschlags des Wandlers kann es in der oben genannten Ausführungsform vorteilhaft sein, dass der kapazitive Wandler und das Bezugspotential über einen Kondensator mit dem invertierenden Eingang der Verstärkerschaltung verbunden ist, der aber in dieser Ausführungsform nicht als herkömmlicher Koppelkondensator, sondern als reiner Schutz fungiert, da ja an beiden Seiten dieser Kapazität die selbe Spannung anliegt, nämlich die Bias-Spannung. Die Größe dieser Kapazität kann in diesem Fall auch sehr groß gewählt werden, beispielsweise 100 nF, da ja in diesem Fall der Wandler mit der Serienschaltung von Kapazität und Innenwiderstand der Bias-Spannungsquelle belastet wird. Der Innenwiderstand ist aber im Normalfall so hoch, dass die Belastung des Wandlers annähernd vernachlässigt werden kann.

Die Kapazität des kapazitiven Ultraschallwandlers stellt mit dem Einkoppelwiderstand der Bias-Spannung ein RC-Glied und damit einen Tiefpassfilter für Störungen der Bias-Spannung dar. Da ja nun dieselbe Spannung, nämlich die Bias-Spannung, am nichtinvertierenden Eingang des Verstärkers anliegt (eventuell mittels der oben beschriebenen Kapazität vom Wandlerpotential getrennt) ist es vorteilhaft und erfindungsgemäß vorgesehen, Störungen am nicht invertierenden Eingang des Verstärkers zu unterdrücken, indem am nicht invertierenden Eingang der Verstärkerschaltung ebenfalls das Bezugpotential über ein RC-Glied anliegt.

Vorteilhafterweise ist es in einer speziellen Ausführungsform vorgesehen, dass die Zeitkonstante dieses RC-Gliedes etwa gleich groß ist wie die Zeitkonstante des aus Wandlerkapazität und Einkoppelwiderstand des Bezugspotentials gebildeten Filters.

Zur Unterdrückung störender Signalanteile außerhalb des genutzten Frequenzbereichs von beispielsweise 300 - 400 kHz sind der primären Verstärkerschaltung erfindungsgemäß weitere Filter nachgeschaltet, vorzugsweise ein Hochpassfilter, allenfalls eine zweite Verstärkerstufe mit nachfolgendem Bandpassfilter und evtl. zumindest einem Auskoppel-Kondensator. Dabei kann die Entkopplung des Nutzsignals von der Bias-Spannung mittels eines spannungsfesten Kopplungskondensators beliebig sowohl vor, in, als auch nach diesen Schaltungen erfolgen.

Gemäß der Erfindung ist eine Vorrichtung zur Messung von Abgas-Strömungen von Verbrennungskraftmaschinen dadurch gekennzeichnet, dass in den Abgasstrang der Verbrennungskraftmaschine ein Gasdurchflusssensor gemäß einem der vorhergehenden Absätze eingebaut ist. Damit können für die pulsierenden und in vielen Betriebszuständen äußerst heißen Abgase genaue und hochdynamische Messungen des Durchflusses durchgeführt werden, sei es stationär in Prüfständen oder Werkstätten oder auch on-board bei im normalen Betrieb befindlichen Fahrzeugen. Eine Anwendung direkt im Auslasskrümmer des Einzelzylinders ist ebenso denkbar wie der Einbau vor und nach dem Katalysator sowie zwischen den Schalldämpfern und am Ende des Abgasstrangs.

Gemäß einer vorteilhaften Ausführungsform ist weiters vorgesehen, dass der Gasdurchflusssensor in unmittelbarer Nähe eines allfälligen Ortes einer Gasentnahme für die Bestimmung der Schadstoffkomponenten im Abgas vorgesehen ist.

Natürlich kann, wenn es die Messung erfordert und/oder die Einbaustelle günstiger ist, der Gasdurchflusssensor in Leitungsabschnitten eingesetzt sein, welche von Teilströmen des Abgases der Verbrennungskraftmaschine durchströmt werden.

Um ein möglichst vollständiges Bild der Verbrennungskraftmaschine zu erhalten, sind günstigstenfalls alle Gasströmungen zu überwachen, wozu vorteilhafterweise vorgesehen sein kann, dass der Gasdurchflusssensor in Leitungsabschnitten eingesetzt ist, welche von Gasströmungen zur Verdünnung des Abgases der Verbrennungskraftmaschine durchströmt werden.

Um nicht nur von der apparativen Seite her die Gasdurchflussmessung mit kapazitiven Schallwandlern zu verbessern, sondern auch das eingangs beschriebene Auswerteverfahren zu verbessern, ist es erfindungsgemäß vorgesehen, dass nach Bestimmung der Laufzeiten ein Schätzwert für den Durchfluss berechnet wird und dieser zumindest mittels einer charakteristischen Temperatur des Gases und der Temperatur der Rohrwand korrigiert wird.

So wird unter Berücksichtigung einer vom Strömungsprofil abhängigen Konstante $k_1$, der Laufzeit in Strömungsrichtung $t_+$, der Laufzeit gegen Strömungsrichtung $t_-$, sowie zweier von der Rohrgeometrie abhängigen Konstanten $k_2$ und $k_3$ zunächst ein Schätzwert für die Strömungsgeschwindigkeit $v$, und der Schallgeschwindigkeit $c$ ermittelt:

$$v = k_1 k_2 \left( \frac{1}{t_+} - \frac{1}{t_-} \right) \qquad \text{(EQ 1)}$$

$$c = k_3 \left( \frac{1}{t_+} + \frac{1}{t_-} \right) \qquad \text{(EQ 2)}$$

Einen ersten Schätzwert für den Volumendurchfluss $\dot{V}$ erhält man aus Gleichung EQ 1 mittels Multiplikation mit der Querschnittsfläche des Messrohres $A$:

$$\dot{V} = Av = Ak_1 k_2 \left( \frac{1}{t_+} - \frac{1}{t_-} \right) \qquad\qquad \text{(EQ 3)}$$

Dieser Schätzwert wird nun in Abhängigkeit einer charakteristischen Temperatur $T_C$ sowie der Temperatur der Rohrwand $T_W$ mittels der Funktion $f_1(T_C, T_W)$ korrigiert:

$$\widetilde{\dot{V}} = f_1(T_C, T_W)\dot{V} = f_1(T_C, T_W) Ak_1 k_2 \left( \frac{1}{t_+} - \frac{1}{t_-} \right) \qquad\qquad \text{(EQ 4)}$$

Sollte man an einem Wert für den aktuellen Massenfluss interessiert sein, kann dieser aus Gleichung EQ 4 mittels Multiplikation mit einer nominellen Dichte berechnet werden

Zusätzlich ist es in einer weiter verbesserten Ausführungsform des Verfahrens vorgesehen, dass zur Bestimmung dieses Schätzwertes der Wert des aktuellen Drucks im Messrohr, vorzugsweise exakt am Ort der Laufzeitmessung, herangezogen wird. Dadurch können rasche Dichteänderungen des strömenden Mediums in die Berechnung einfließen. Dazu wird die aktuelle Dichte $\rho$ aus der mittels der Laufzeiten berechneten Schallgeschwindigkeit $c$ (EQ 2), dem Verhältnis der spezifischen Wärmekapazitäten $\kappa$ und dem aktuellen Druck $p$ bestimmt:

$$\rho = \frac{\kappa p}{c^2} \qquad\qquad \text{(EQ 5)}$$

In einer weiteren besonderen Ausführungsform ist es vorgesehen, dass der Schätzwert in Abhängigkeit der Temperaturdifferenz der charakteristischen Temperatur des Gases und der Temperatur der Wand des Messrohres korrigiert wird. So hat sich ein funktionaler Zusammenhang der Funktion $f_1(T_C, T_W)$ der Form:

$$f_1(T_C, T_W) = k_4(T_C\text{-}T_W) \qquad\qquad \text{(EQ 6)}$$

als besonders vorteilhaft erwiesen. Dabei ist $k_4$ eine Konstante die empirisch oder aufgrund theoretischer Annahmen über das Strömungs- und Temperaturprofil bestimmt wird.

Zur Bestimmung der angeführten Temperaturen kann es dabei erfindungsgemäß vorgesehen sein, dass entweder die Temperatur der Rohrwand, oder die Temperatur des Gases im Messrohr, oder auch beide Temperaturen, gemessen werden. Dazu können herkömmliche Temperatursensoren zum Einsatz kommen.

Nachteilig wirkt sich dabei allerdings die langsamen Reaktionszeiten von Temperatursensoren, insbesondere bei der Messung der Gastemperatur, aus, die sich ja in nur sehr kurzen Zeitintervallen, beispielsweise einigen Millisekunden, ändern kann. Daher ist es erfindungsgemäß vorgesehen, dass die charakteristische Temperatur des Gases aus den Laufzeiten und damit einem Schätzwert für die Schallgeschwindigkeit anhand eines physikalischen Modells des Temperaturprofils im Messrohr ermittelt wird.

Weiters ist es erfindungsgemäß vorgesehen, die charakteristische Temperatur des Gases durch Berücksichtigung der Temperatur der Wand des Messrohres weiter zu präzisieren.

Die mittels der Laufzeitmessung ermittelte Schallgeschwindigkeit $c$ stellt ja einen Mittelwert der ortsabhängigen Schallgeschwindigkeit $\widetilde{c}(r)$ ($r$ ... Rohrradius eines radialsymmetrischen Rohres, $R$ ... Rohrinnenradius) über den Rohrquerschnitt dar:

$$c = \frac{1}{2R} \int_{-R}^{R} \widetilde{c}(r)\,dr \qquad\qquad \text{(EQ 7)}$$

Geht man weiters, entsprechend der idealen Gasgleichung von folgender Darstellungsform der örtlichen Schallgeschwindigkeit aus:

$$\tilde{c}(r) = \frac{\kappa R}{M}\sqrt{T_C}\sqrt{f_2(r)}$$

Wobei $f_2(r)$ implizit die Form des Temperaturprofils $M$, die Molmasse des Gases und R die ideale Gaskonstante ist. So kann aus den Gleichungen EQ 7 und EQ 8 eine charakteristische Temperatur des Gases bestimmt werden.

Da ja, wie bereits erwähnt, die Temperaturänderungen im Gas sehr rasch erfolgen können, ist es vorteilhaft, die Temperaturmessungen derart durchzuführen, dass die Messwerte der Temperaturen und die Messwerte der Laufzeit für das selbe Volumen Gültigkeit haben. Das kann dadurch erreicht werden, dass bei der Wahl der Zeitpunkte für die Temperaturmessung(en) und Laufzeitmessungen die Geometrie der Anordnung und die Strömungsgeschwindigkeit berücksichtigt werden.

In einer besonderen Ausführungsform des Verfahrens ist es vorgesehen bei der Berechnung des Schätzwertes der strömenden Gasmenge die Gaszusammensetzung des Mediums insofern zu berücksichtigen, dass ein nomineller Wert für den Adiabatenkoeffizienten $\kappa$, d.h. des Verhältnisses der spezifischen Wärmekapazitäten bei konstanten Druck und Volumen, für die Berechnung der Gasmenge angenommen wird.

Des weiteren ist es vorgesehen, diesen nominellen Wert entsprechend der charakteristischen Temperatur des Gases zu korrigieren, das heißt in den Gleichungen EQ 8 und EQ 5 wird der entsprechen der Zusammensetzung des Gases Temperaturabhängige Adiabatenkoeffizient $\kappa(T_C)$ eingesetzt.

Zur Berücksichtigung parasitärer Reflexionssignale und damit zur präzisen Detektion der Ultraschall-Laufzeiten ist es erfindungsgemäß vorgesehen, dass in Abhängigkeit vom Sendezeitpunkt und einem Schätzwert für die Laufzeit der Ultraschallsignale ein Erwartungszeitfenster bestimmt wird. In diesem Zeitfenster erfolgt dann die Suche nach dem genauen Eintreffzeitpunkt des Empfangssignals.

Weiters ist es vorgesehen die Abfolge der Sendezeitpunkte, d.h. die Messwiederholrate, in Abhängigkeit von der geschätzten Laufzeit anzupassen, womit erreicht werden kann, dass voraussichtlich kein parasitäres Reflexionssignal im Erwartungszeitfenster vor dem eigentlichen Nutzsignal liegt.

Als Schätzwert für die Laufzeit kann in einfacher Weise gemäß einer ersten Verfahrensvariante die Laufzeit der vorangegangenen Messung herangezogen werden.

Ein wenig aufwendiger in der Ermittlung, jedoch mit größerer Genauigkeit behaftet, kann eine andere Verfahrensvariante vorsehen, dass als Schätzwert ein in Abhängigkeit des Ergebnisses der vorangegangenen Durchflussmessung modellhaft gebildeter Rechenwert herangezogen wird.

In einer weiteren vorteilhaften Ausführungsform des Verfahrens ist es vorgesehen, dass für die Bestimmung der Laufzeit zuerst ein geschätzter Zeitpunkt für den Beginn des Empfangssignals festgelegt wird und der präzise Beginn durch Analyse der Phaseninformation des komplexwertig dargestellten Empfangssignals festgelegt wird.

Zur Bestimmung des komplexwertigen Empfangssignals kann beispielsweise die Hilbert-Transformation des realen Empfangssignals benutzt werden.

So wird in einer besonders vorteilhaften Ausführungsform des Auswerteverfahrens für das reelle Empfangssignal die aktuelle Phasenlage der komplexwertigen Darstellung des Empfangssignals bestimmt und zu einem beliebigen Zeitpunkt im Bereich einer steten Veränderung der Phasenlage der geschätzte Zeitpunkt für den Beginn des Empfangssignals festgelegt.

Vorteilhafterweise kann dabei als für den geschätzten Zeitpunkt des Beginns des Empfangssignals der Zeitpunkt des Auftretens der maximalen Amplitude herangezogen werden. Mit einem derartigen Verfahren kann der Eintreffzeitpunkt mit zumindest einer Unsicherheit von einer halben Periodendauer des Sendesignals ($\pm$ T/2) festgelegt werden.

Zur Erhöhung der Präzision kann weiters vorgesehen sein, dass ausgehend vom geschätzten Zeitpunkt für den Beginn des Empfangssignals der präzise Beginn des Empfangssignal anhand erstmals verrauschter Phasenlage bestimmt wird. Vorzugsweise wird dabei der erste Nulldurchgang des Empfangssignals als den Eintreffzeitpunkt bestimmendes Schallmerkmal definiert.

Im folgenden soll die Erfindung anhand von einigen Abbildungen bevorzugter Ausführungsbeispiele der Erfindung veranschaulicht werden:

Dabei zeigt Fig. 1 schematisch den Aufbau eines erfindungsgemäßen Gasdurchflusssensors, Fig. 2 und 2a zeigen eine Gesamtansicht und ein Detail eines erfindungsgemäßen kapazitiven Ultraschallwandlers, Fig. 3 zeigt einen kapazitiven Ultraschallwandler in Array-Bauweise, Fig.4 zeigt schematisch eine erfindungsgemäße Verstärkerschaltung für die Primärsignale der kapazitiven Schallwandler, Fig. 5 ist eine Darstellung des Auswerteverfahrens in Blockdiagramm-Form, und Fig. 6 zeigt eine Darstellung der Sende- und Empfangssignale eines Sender- und Empfänger-Paares sowie das zugehörige Phasensignal des Empfangssignals.

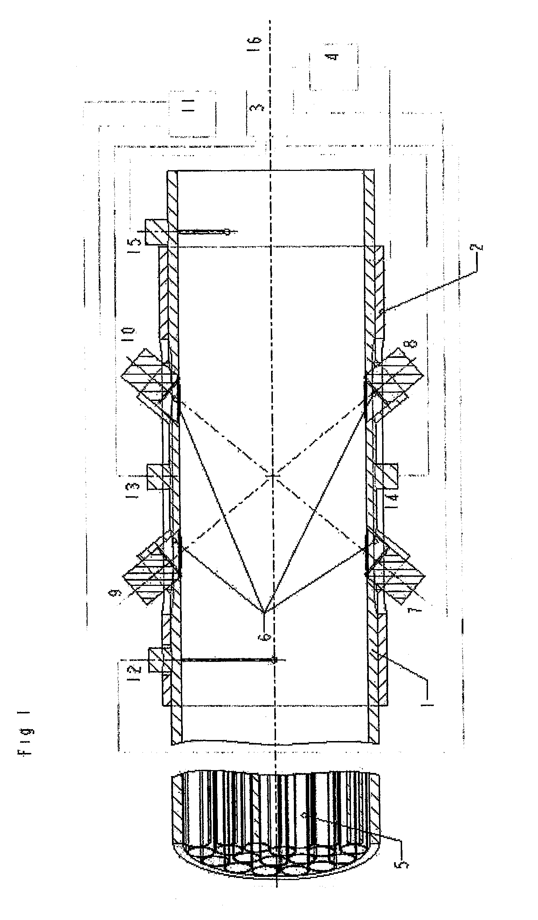

Die Längsschnitt-Darstellung der erfindungsgemäßen Gasdurchflusssensor-Anordnung der Fig. 1 zeigt das Messrohr 1, durch welches das Gas strömt, dessen Volumen oder Masse bestimmt werden soll. Das Messrohr 1 weist Heizelemente 2 auf, mit deren Hilfe die Temperatur des Messrohres 1, gesteuert über die Auswerteelektronik 3 unter Zwischenschaltung einer Heizungs-Steuerelektronik 4 beheizt werden kann. Das Messrohr ist vorteilhafterweise mit zusätzlichen strömungs- und temperaturprofilformenden Einbauten 5 zumindest vor dem Ort der Laufzeitmessung (bezogen auf die Richtung der hauptsächlichen Durchströmung des Rohres) ausgestattet. Diese Einbauten 5 können als Leitbleche oder Bündel aus Rohren mit geringerem Durchmesser als das Messrohr 1 ausgebildet sein.

In Taschen oder seitlichen Rohrstutzen des Messrohres 1, welche durch schalldurchlässige, doch bündig mit der Wand des Messrohres 1 abschließende Abdeckungen 6, beispielsweise Gittern od. dgl., verschlossen sein können, sind die Sendewandler 7 und 8 sowie die Empfangswandler 9 und 10 eingesetzt, die als kapazitive Ultraschallwandler ausgeführt sind. Über die Heizelemente 2 für die Wand des Messrohres 1 oder über eigene, separate Heizelemente können auch die kapazitiven Wandler 7 bis 10 und die Abdeckungen 6 beheizt werden.

Die Ultraschallwandler 7 bis 10, vorzugsweise nur die Empfangswandler 9 und 10, können allenfalls in einem in Längsrichtung des Messrohres 1 verschiebbaren Einsatz gelagert sein, welcher durch beispielsweise eine Spindel mit Schrittmotor verstellbar ist. Damit kann eine Verschiebung auch adaptiv im Betrieb, gesteuert durch die Auswerteelektronik 3, vorgenommen werden. Die longitudinale Einstellung der Wandler 7 bis 10 kann auch in vordefinierten diskreten Schritten erfolgen.

Die Wandler 7 bis 10 können aber auch drehbar im oder am Messrohr 1 gelagert sein, vorteilhafterweise um eine normal auf die Längsachse des Messrohres 1 und parallel zur Tangente an die Wand des Messrohres 1 an der Einbaustelle des jeweiligen Wandlers 7 bis 10 orientierte Achse. Auch mit einer derartigen Anordnung kann dem Phänomen der Verwehung der Schallsignale entgegengewirkt und können auch Brechungseffekte berücksichtigt werden.

Schematisch ist in Fig. 1 weiters die Empfangselektronik 11 dargestellt, welche die Verstärkung und analoge Primärverarbeitung der Empfangssignale leistet. Sie ist verbunden mit der Auswerteelektronik 3, die sowohl die Sendesignalgenerierung als auch die Steuerelektronik 4 der Heizung steuert. Als zusätzliche Eingangssignale werden der Auswerteelektronik 3 die Ergebnisse zumindest eines Temperatursensors 12 für die Gastemperatur und eines Temperatursensors 13 für die Rohrwandtemperatur, sowie vorteilhafterweise die Werte eines Drucksensors 14 zur Verfügung gestellt. Zur allfälligen Berücksichtigung der Gaszusammensetzung, die ebenfalls in die Berechnung der Gasströmung eingeht, kann vorteilhafterweise eine Lambda-Sonde 15 vorhanden sein, die über eine Leitung die Information der aktuellen Luftzahl an die Auswerteelektronik 3 weiterleitet. Alternativ dazu kann über eine Datenleitung 16 (strichliert dargestellt) die Information über die Gaszusammensetzung beispielsweise von einer Abgas-Analyseanlage an die Auswerteelektronik 3 weitergeleitet werden.

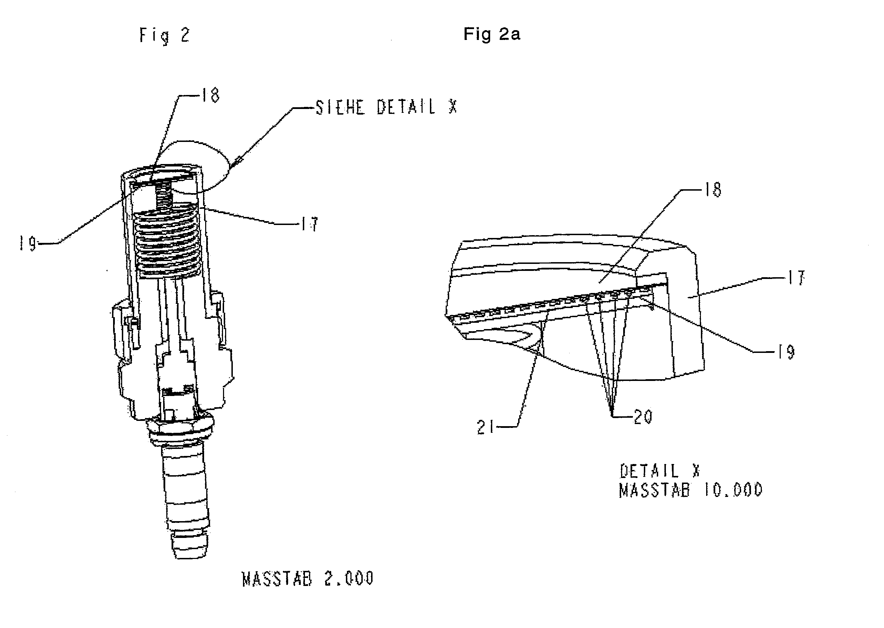

Fig. 2 zeigt einen erfindungsgemäßen kapazitiven Ultraschallwandler zum Einsatz in der Gasdurchflusssensor-Anordnung der Fig. 1, während die Fig. 2a eine Detailvergrößerung des Vorderendes dieses Ultraschallwandlers ist, über welches das Schallsignal in das Gas eingekoppelt wird. In einem Wandlerkorpus 17 ist eine metallische Membran 18 als eine Elektrode sowie die Rückplatte 19 als zweite Elektrode des eigentlichen aktiven Teiles des Schallwandlers gelagert. In der Detailansicht der Fig. 2a ist die Strukturierung der Rückplatte 19 in Form von regelmäßigen Stegen 20 zu erkennen, welche vorzugsweise in die Isolationsschicht 21 der Rückplatte 19 geätzt ist, so dass ein konstanter Abstand zwischen den beiden Elektroden, d.h. der Membran 18 und der dotierten Rückplatte 19, gewährleistet ist.

Im Fall der Abbildung 2a wurde die Strukturierung 20 nach der Herstellung der Isolationsschicht 21 durchgeführt. Dabei wird die Rückplatte 19 zuerst oxidiert und danach die Strukturierung in der Isolationsschicht 21 durch Ätzen erzeugt. Es kann aber auch zuerst die Strukturierung der Rückplatte 19 erfolgen und danach die Herstellung der Isolationsschicht 21. Dazu wird das Trägermaterial zuerst geätzt und dann oxidiert.

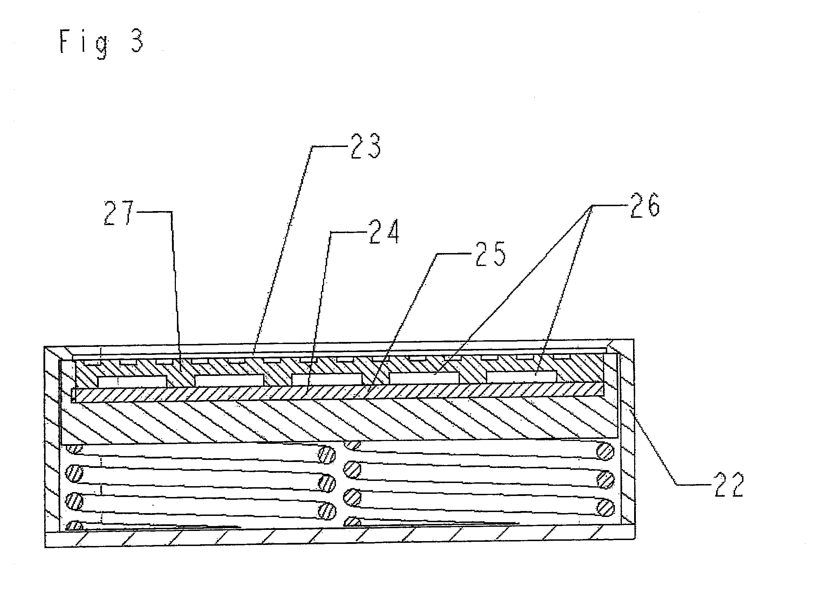

Fig. 3 zeigt den schematischen Aufbau eines erfindungsgemäßen kapazitiven Arraywandlers im Querschnitt. In gleicher Weise wie in Fig. 2 und Fig. 2a ist in einem Korpus 22 des Wandlers die metallische Membran 23 sowie die Rückplatte 24 als erste und zweite Elektrode gelagert. Dabei setzt sich die Rückplatte 24 aus dem isolierenden Grundmaterial 25, dem Substrat, den einzeln kontaktierbaren und damit einzeln ansteuerbaren Elektroden 26 und der Isolationsschicht 27 zusammen. Das Substrat 25, auf welchem die Elektroden beispielsweise aufgedampft oder -gesputtert sind, könnte z.B. aus Keramik, Saphir oder auch $SiO_2$ bestehen.

Ein hochtemperaturfester Array-Wandler, wie in Fig. 3 dargestellt, bringt im wesentlichen zwei Vorteile mit sich. Erstens sind durch den bündig mit der Rohrinnenwand möglichen Einbau keinerlei Taschen oder Buchten im Messrohr 1 mehr notwendig, und zweitens kann die Richtung der Schallkeule für den Sende- oder Empfangsbetrieb einfach durch entsprechende elektronische Ansteuerung der einzelnen Wandlerareale im Betrieb eingestellt und auch adaptiv nachgeführt werden, um etwa die Verwehung des Schallstrahls in der Gasströmung zu berücksichtigen.

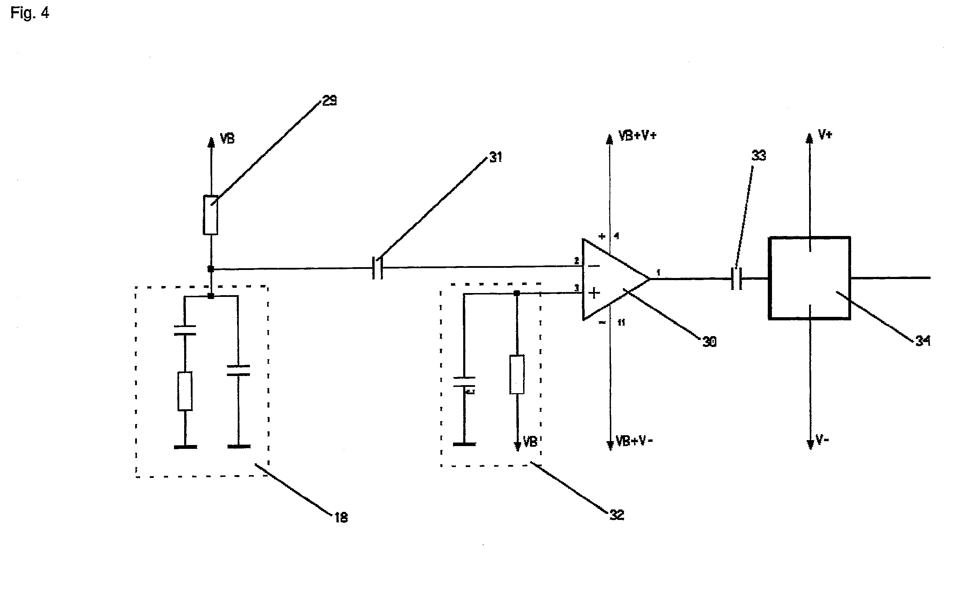

Fig. 4 zeigt schematisch den Aufbau eines vorzugsweise in die Auswerteelektronik 3 integrierten oder dieser vorgeschalteten Empfangsverstärkers. In der Abbildung ist strichliert umrandet das Ersatzschaltbild 28 des kapazitiven Empfangs-Ultraschallwandlers 9 oder 10 dargestellt. Über den Einkoppelwiderstand 29 wird die Bias-Spannung VB eingekoppelt. Verbunden ist der Wandler mit dem nachfolgenden Verstärker 30 über einen Kondensator 31, der zum Schutz der Verstärkerschaltung, beispielsweise im Falle eines Durchbrechens der Wandlerisolation, dient. Über ein RC-Glied 32 ist dem Verstärker 30 am nichtinvertierenden Eingang ebenso die Bias-Spannung VB aufgeschaltet. Um am Eingang des Operationsverstärkers 30 symmetrische Verhältnisse zu schaffen, ist die Zeitkonstante des RC-Gliedes 32 vorteilhafterweise etwa gleich groß jener des angeschlossenen Ultraschallwandlers, d.h. der Widerstand des RC-Gliedes 32 entspricht dem Bias-Widerstand am invertierenden Eingang und die Kapazität des RC-Gliedes 32 entspricht der Kapazität des Wandlers 9 oder 10. Dies bringt den Vorteil, dass mit etwa gleicher Grenzfrequenz auch am nichtinvertierenden Eingang des Operationsverstärkers 30 eine Tiefpassfilterung der eventuell auf der Gleichspannung vorhandenen Störungen stattfindet, so wie dies für den invertierenden Eingang durch den Bias-Widerstand und den kapazitiven Wandler selbst der Fall ist.

Die Versorgung des Verstärkers 30 erfolgt symmetrisch um das Bias-Spannungspotential. Über einen weiteren Koppelkondensator 33 und eine vorzugsweise nachgeschaltete Filterschaltung 34, die nicht mehr auf Bias-Spannungspotential liegt, wird das Empfangssignal des Empfangs-Ultraschallwandlers 9 oder 10 dann der weiteren Verarbeitung zugeführt. Um die erforderliche Gesamtverstärkung (bis zu 80 dB) zu erreichen, kann - vorzugsweise hinter der Filterschaltung 34 - ein zweiter Verstärker nachgeschaltet sein. Dafür bietet sich ein Elektrometerverstärker an. Eine Einstellung (AGC, automatic gain control) der Gesamtverstärkung der Empfangselektronik wird zweckmäßig in dieser zweiten Stufe vorgenommen. Ein Verändern der Verstärkung in der ersten Stufe kann nämlich das Frequenzübertragungsverhalten stark beeinflussen.

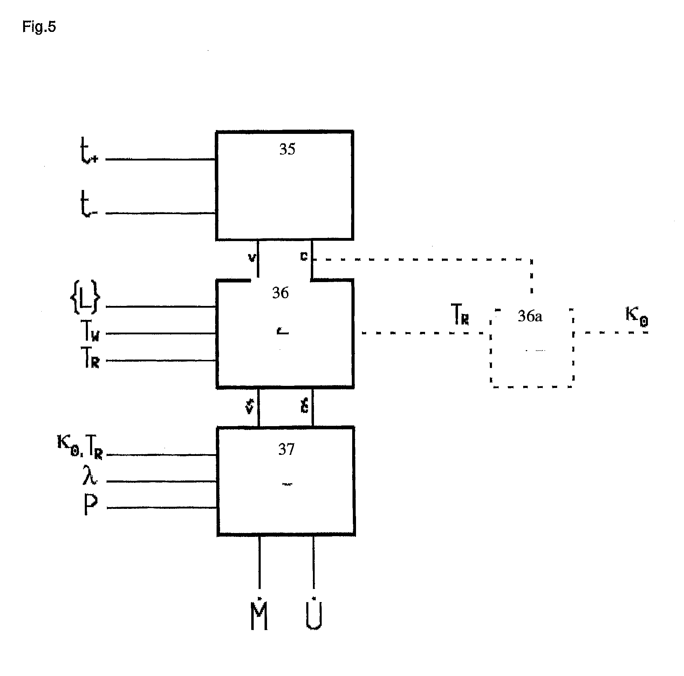

Fig. 5 zeigt schematisch das erfindungsgemäße Auswerteverfahren in Blockdarstellung: In einem ersten Schritt 35 werden aus den Eingangsgrößen t+ und t-, den Laufzeiten des Ultraschalls in und gegen Strömungsrichtung des zu messenden Gases, Schätzwerte für die Strömungsgeschwindigkeit v und die Schallgeschwindigkeit c über herkömmliche Formeln berechnet. In einem zweiten Schritt 36 werden unter Berücksichtigung von Geometriekenngrößen, symbolisiert durch die Eingangsgröße {L}, und/oder den Temperaturen der Wand des Messrohres 1 TW und/oder einer charakteristischen Temperatur des Gases TG eine verbesserten Schätzung für die Werte der Strömungs- und Schallgeschwindigkeit$\tilde{v}$ und $\tilde{c}$ bestimmt. Gemäß einem einfachen, keinesfalls aber einzigen, Modell für die Verhältnisse im Meßrohr 1 erfolgt die Korrektur des Schätzwertes für den Durchfluss mit Hilfe eines linearen Korrekturfaktors für die Strömungsgeschwindigkeit, welcher Korrekturfaktor in einfachsten Modellen linear von einer normierten Temperaturdifferenz der charakteristischen Temperatur des Gases und der Temperatur der Wand des Meßrohres abhängt.

Um anzudeuten, dass die charakteristische Temperatur des Gases nicht nur durch Messung bestimmt werden kann, sondern auch aus der Schallgeschwindigkeit unter Berücksichtigung von Stoffgrößen, ist strichliert ein alternativer Berechnungsvorgang 36a dargestellt. Im letzten Schritt 37 wird mit den Eingangsgrößen κ (Kappa), dem Adiabatenkoeffizient, eventuell nochmals einer charakteristischen Temperatur TG des Gases, und der Luftzahl λ (Lambda) sowie dem aktuellen Druck p die strömende Gasmasse M oder das strömende Gasvolumen V bestimmt.

Bei der Ermittlung des Gasdurchflusses aus den Schalllaufzeiten ist vorteilhafterweise eine Plausibilitätskontrolle über die theoretische mittlere Schallgeschwindigkeit im Messrohr 1 vorgesehen. Über die molare Masse des Gases, die universelle Gaskonstante und den temperaturabhängigen Adiabatenkoeffizienten des Gases besteht ein bekannter Zusammenhang zwischen der Gastemperatur TG und der Schallgeschwindigkeit c, der für eine Plausibilitätsprüfung genutzt werden kann. Um den Wert der molaren Masse zu ermitteln, wird beispielsweise mit Hilfe der Lambda-Sonde 12 oder anderer Analysatoren die Zusammensetzung des Gases bestimmt. Diese wird weiters auch noch für die Berechnung des temperaturabhängigen Adiabatenkoeffizienten κ(T) benötigt, dessen Abhängigkeit von der Temperatur T vorzugsweise auch bei der Bestimmung der strömenden Gasmasse M oder des Gasvolumens V nicht vernachlässigt wird.

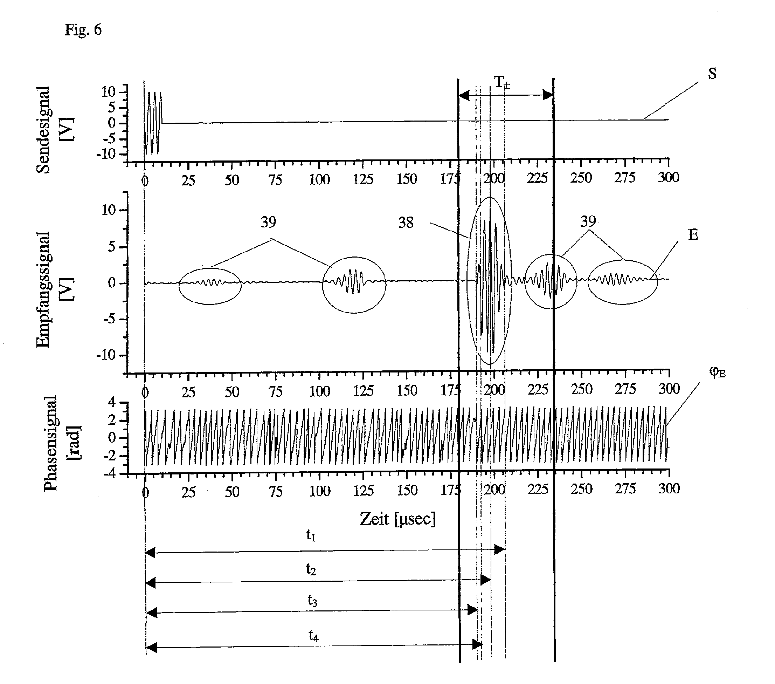

Die erfindungsgemäße genaue Ermittlung der Zeitpunkte des Eintreffens der Ultraschallsignale wird nachfolgend unter Verweis auf die Fig. 6 erläutert. Dabei sind in Fig. 6 übereinander mit gleicher Zeitachse drei Signale dargestellt. Ganz oben ist das Sendesignal S zu erkennen, das hier in Form eines Bursts von drei Wellenzügen vorliegt. In der Mitte der Fig. 6 ist das eigentliche Empfangssignal E dargestellt. Zu erkennen sind das Nutzsignal 38, das durch direktes Empfangen des vom Sender abgestrahlten Schallpulses am Empfänger auftrifft, sowie auch parasitäre Reflexionssignale 39, die von Mehrfachreflexionen zwischen Sender 7 und 8 und Empfänger 9 und 10 herrühren. Sie treffen in Abhängigkeit von der effektiven Schallgeschwindigkeit des Mediums nach mehrmaligem und ungeradzahligem Durchlaufen der Strecke Sender/Empfänger später auf dem Empfänger auf. Die in der Figur gezeigten parasitären Reflexionssignale stammen daher von Sendepulsen, die vor dem in der Darstellung gezeigtem Sendepuls (Burst) liegen.

Das unterste Signal φE zeigt die Phasenlage des über beispielsweise eine Hilbert-Transformation oder ähnliche Faltungsintegrale komplexwertig dargestellten Empfangssignals. In den Bereichen, in denen das eigentliche Nutzsignal ebenso wie die parasitären Reflexionen vorliegen, ist eine stetige Veränderung der Phasenlage zu erkennen. Bei Eintreffen des Pulses auf den Wandler beginnt die Phase mit einer relativ gleichmäßigen "Steigung" zu drehen. Diese Steigung hängt von der Signalfrequenz des Empfangssignals ab. Bei der ersten Auslenkung im Empfangssignal E dreht die Phase nicht mehr komplett über die gesamte Amplitude, weil die erste Auslenkung den Übergang vom Phasenrauschen zum Puls bildet. Dort wo eine Auslenkung ihr Maximum hat, kreuzt die Phase die Null-Linie. Bevor der Puls ankommt ist ein Phasenrauschen zu beobachten.

Aus einem ersten Schätzwert t1 für die Laufzeit des Ultraschallsignals wird ein Erwartungszeitfenster T± um diesen Schätzwert t1 definiert. Innerhalb dieses Zeitfensters wird nach einem verbesserten Schätzwert für die Laufzeit tL gesucht. Dafür wird der maximale Amplitudenwert des Empfangssignals E als verbesserter Schätzwert t2 bestimmt. Von diesem Wert aus wird nun in Richtung Sendezeitpunkt hin jener Zeitpunkt t3 bestimmt, an dem die stete Änderung der Phasenlage aufhört. Von diesem neuerlichen Schätzwert t3 aus wird nun in Richtung positiver Zeit der Zeitpunkt t4 bestimmt, der den ersten Nulldurchgang des Empfangssignals bestimmt. Dieser systematisch um eine halbe Periode zum eigentlichen Eintreffzeitpunkt des Empfangssignals verschobene Zeitpunkt wird rechnerisch korrigiert und als Laufzeit für die weitere Verarbeitung herangezogen.

Wie oben beschrieben setzt sich das Empfangssignal aus der Überlagerung von Nutzsignalen und parasitären Reflexionssignalen zusammen. Dabei ist der zeitliche Abstand zwischen zusammengehörigen Empfangspulsen, d.h. zwischen Signalen, die vom selben Sendeimpuls stammen, immer ein geradzahliges Vielfaches der mittleren Laufzeit in und gegen Strömungsrichtung. Diese mittlere Laufzeit ist aber in erster Linie durch die aktuelle Schallgeschwindigkeit des Mediums bestimmt und damit in hohem Ausmaß von der aktuellen Temperatur.

Für viele Anwendungsgebiete kann die Temperatur des Gases in einem großen Bereich schnell schwanken. Dies führt unweigerlich zu dem gravierenden Problem, dass es zu störenden Überlagerungen von Nutzsignal und Reflexionssignalen im Bereich des Erwartungszeitfensters kommen kann, welche eine zeitgenaue Auswertung erschweren und zu Fehlmessungen führen können, da das reflektierte Signal bezüglich der Eigenschaften wie z.B. Signalform und Phase dem eigentlichen Empfangssignal sehr ähnlich ist.

Die erfindungsgemäß vorgeschlagene Lösung dieses Problems besteht nun darin, auf die Messwiederholrate Einfluss zu nehmen, so dass Überlagerungen zwischen Empfangssignal E und erster bzw. zweiter Reflexion vermieden werden können. Mit Hilfe eines Schätzwertes für die Schallgeschwindigkeit kann eine optimale Messwiederholrate berechnet werden, bei welcher die erste Reflexion und damit auch die zweite Reflexion mit einem frei wählbaren zeitlichen Sicherheitsabstand immer hinter dem eigentlichen Empfangssignal zu liegen kommt. Sinnvollerweise wird dieser Sicherheitsabstand möglichst klein gewählt, sodass eine hohe Messwiederholrate ermöglicht und der Bereich vor dem Empfangssignal bezüglich zweiter und auch weiterer Reflexionen "sauber" gehalten wird. Es ist weiters sinnvoll diesen Sicherheitsabstand von der Dauer des Sendesignals abhängig zu machen.

Vorteilhafterweise können die Sendesignale ineinander verschachtelt werden, solange für das Empfangssignal E und die ersten beiden Reflexionen genügend zeitlicher Abstand zum nachfolgenden Empfangssignal E vorhanden ist. Damit kann bei Bedarf die Messwiederholrate erhöht werden.

Sollte die Messwiederholrate adaptiv eingestellt werden, müssen die entsprechenden Zeitmarken mit den errechneten Massenflusswerten mit abgespeichert werden, um den Verlauf des Massenfluss über der Zeit rekonstruieren zu können.

**Patentansprüche**

1.   Ultraschall-Gasdurchflusssensor nach dem Laufzeitverfahren, umfassend ein vom Gas durchströmtes Messrohr mit zumindest einem Sende- und zumindest einem Empfangs-Schallwandler und eine Sende- , Empfangs- und Auswerte-Elektronik, **dadurch gekennzeichnet, dass** die Schallwandler (7, 8, 9, 10) zur Schallgenerierung sowie zum Empfang der zeitlich transienten Schallsignale als kapazitive elektroakustische Ultraschallwandler ausgeführt sind und Einrichtungen (5, 6) zur Vergleichmäßigung des Gastemperaturprofils der Strömung und zur Minimierung des Einflusses des Temperaturprofils auf die Strömungsmessung vorgesehen sind.

2.   Gasdurchflusssensor nach Anspruch 1, **dadurch gekennzeichnet, dass** der Wandler (7, 8, 9, 10) eine Metallmembran (18, 23), beispielsweise aus Titanwerkstoff, aufweist.

3.   Gasdurchflusssensor nach Anspruch 2, **dadurch gekennzeichnet, dass** die Rückplatte (19, 24) aus einem dotierten Halbleiter und einer darüberliegenden Isolierschicht (21, 27) besteht, die beispielsweise aufgebracht ist, auf welcher die Membran (18) vorzugsweise unmittelbar aufliegt.

4.   Gasdurchflusssensor nach Anspruch 3, **dadurch gekennzeichnet, dass** die Isolierschicht (21, 27) durch ein Material gebildet ist, das durch Reaktion des Materials der zweiten Elektrode bzw. Rückplatte (19, 24) unter Wärmeeinwirkung mit der umgebenden Atmosphäre während des Herstellungsprozesses entstanden ist.

5.   Gasdurchflusssensor nach Anspruch 3 oder 4, **dadurch gekennzeichnet, dass** die zweite Elektrode bzw. Rückplatte (19, 24) mit einer Strukturierung (20) versehen ist.

6.   Gasdurchflusssensor nach Anspruch 5, **dadurch gekennzeichnet, dass** die zweite Elektrode bzw. Rückplatte (19, 24) mit einer Strukturierung (20) aus diskreten, künstlichen Strukturen versehen ist, vorzugsweise einer geätzten Strukturierung.

7. Gasdurchflusssensor nach einem der Ansprüche 1 bis 6, **dadurch gekennzeichnet, dass** der Wandler (7, 8, 9, 10) mehrere, separat ansteuerbare Bereiche (26) in linearer oder flächiger Anordnung aufweist.

8. Gasdurchflusssensor nach einem der Ansprüche 1 bis 7, **dadurch gekennzeichnet, dass** zumindest ein Schallwandler (7, 8, 9, 10), vorzugsweise der (die) Empfangswandler (9, 10), verschiebbar gelagert ist.

9. Gasdurchflusssensor nach einem der Ansprüche 1 bis 8, **dadurch gekennzeichnet, dass** einer oder mehrere Wandler (7, 8, 9, 10) drehbar gelagert sind.

10. Gasdurchflusssensor nach einem der Ansprüche 1 bis 9, **dadurch gekennzeichnet, dass** Heizeinrichtungen (2) für die Wand des Messrohres (1), allenfalls auch für die Schallwandler (7, 8, 9, 10), vorgesehen sind.

11. Gasdurchflusssensor nach einem der Ansprüche 1 bis 10, **dadurch gekennzeichnet, dass** das Messrohr (1) aus einem Material mit geringer spezifischer Wärmekapazität, insbesonders thermisch isolierendem Material, angefertigt und/oder mit einer Beschichtung aus derartigem Material versehen und/oder mit einer Umhüllung aus derartigem Material umgeben ist.

12. Gasdurchflusssensor nach einem der Ansprüche 1 bis 11, **dadurch gekennzeichnet, dass** temperatur- und/oder strömungsprofilformende Einbauten (5, 6) im Messrohr (1) installiert bzw. integriert sind.

13. Gasdurchflusssensor nach einem der Ansprüche 1 bis 12, **dadurch gekennzeichnet, dass** zumindest ein Temperatursensor (13) für die Messung der Temperatur der Wand des Messrohres vorgesehen und mit der Auswerteelektronik (3) verbunden ist.

14. Gasdurchflusssensor nach einem der Ansprüche 1 bis 13, **dadurch gekennzeichnet, dass** zumindest ein Temperatursensor (12) für die Messung der Temperatur der Strömung vorgesehen und mit der Auswerteelektronik (3) verbunden ist.

15. Gasdurchflusssensor nach einem der Ansprüche 1 bis 14, **dadurch gekennzeichnet, dass** eine Einrichtung zur Ermittlung der Gaszusammensetzung vorgesehen ist, insbesonders eine Lambda-Sonde (15).

16. Gasdurchflusssensor nach einem der Ansprüche 1 bis 15, **dadurch gekennzeichnet, dass** eine Datenleitung (16) und -schnittstelle vorgesehen ist, über die Informationen über die Gaszusammensetzung der Strömung übermittelt wird.

17. Gasdurchflusssensor nach einem der Ansprüche 1 bis 16, **dadurch gekennzeichnet, dass** die Empfangselektronik (11) als analoger Verstärker aufgebaut ist und das Bezugspotential zumindest der primären Verstärkerstufe (30) auf das Potentialniveau des Wandlers (9, 10), d.h. auf Bias-Spannung, gehoben ist.

18. Gasdurchflusssensor nach Anspruch 17, **dadurch gekennzeichnet, dass** der invertierende Eingang der Verstärkerschaltung (30) direkt mit dem kapazitiven Wandler (9, 10) verbunden ist.

19. Gasdurchflusssensor nach Anspruch 17 oder 18, **dadurch gekennzeichnet, dass** der kapazitive Wandler (9, 10) und das Bezugspotential über einen Kondensator (31) mit dem invertierenden Eingang der Verstärkerschaltung (30) verbunden ist.

20. Gasdurchflusssensor nach einem der Ansprüche 17 bis 19, **dadurch gekennzeichnet, dass** am nicht invertierenden Eingang der Verstärkerschaltung (30) ebenfalls das Bezugspotential über ein RC-Glied (32) anliegt.

21. Gasdurchflusssensor nach Anspruch 20, **dadurch gekennzeichnet, dass** die Zeitkonstante des RC-Gliedes (32) etwa gleich groß ist wie die Zeitkonstante des aus Wandlerkapazität und Einkoppelwiderstand (31) des Bezugspotentials gebildeten Filters.

22. Gasdurchflusssensor nach einem der Ansprüche 17 bis 21, **dadurch gekennzeichnet, dass** der primären Verstärkerstufe (30) weitere Filter (34) nachgeschaltet sind, vorzugsweise ein Hochpassfilter, allenfalls eine zweite Verstärkerstufe mit nachfolgendem Bandpassfilter und evtl. zumindest ein Auskoppel-Kondensator nachgeschaltet

EP 1 498 700 A2

ist (sind).

23. Vorrichtung zur Messung von Abgas-Strömungen von Verbrennungskraftmaschinen, **dadurch gekennzeichnet, dass** in den Abgasstrang der Verbrennungskraftmaschine ein Gasdurchflusssensor gemäß einem der Ansprüche 1 bis 22 eingebaut ist.

24. Vorrichtung nach Anspruch 23, **dadurch gekennzeichnet, dass** der Gasdurchflusssensor in unmittelbarer Nähe eines allfälligen Ortes einer Gasentnahme für die Bestimmung der Schadstoffkomponenten im Abgas vorgesehen ist.

25. Vorrichtung nach Anspruch 23 oder 24, **dadurch gekennzeichnet, dass** der Gasdurchflusssensor in Leitungsabschnitten eingesetzt ist, welche von Teilströmen des Abgases der Verbrennungskraftmaschine durchströmt werden.

26. Vorrichtung nach Anspruch 23 oder 24, **dadurch gekennzeichnet, dass** der Gasdurchflusssensor in Leitungsabschnitten eingesetzt ist, welche von Gasströmungen zur Verdünnung des Abgases der Verbrennungskraftmaschine durchströmt werden.

27. Verfahren zur Ermittlung des Durchflusses von Gasen, wobei die mittlere Strömungsgeschwindigkeit und daraus die strömende Gasmenge aus der Laufzeit von zwei Schallsignalen zwischen Sender und Empfänger mit hoher zeitlicher Auflösung ermittelt wird, **dadurch gekennzeichnet, dass** nach Bestimmung der Laufzeiten ein Schätzwert für den Durchfluss berechnet wird (35) und dieser zumindest mittels einer charakteristische Temperatur des Gases und der Temperatur der Wand des Messrohres korrigiert wird (36).

28. Verfahren nach Anspruch 27, **dadurch gekennzeichnet, dass** zur Bestimmung des Schätzwertes des Durchflusses der Wert des aktuellen Druckes im Messrohr, vorzugsweise exakt am Ort der Laufzeitmessung, herangezogen wird.

29. Verfahren nach Anspruch 27 oder 28, **dadurch gekennzeichnet, dass** der Schätzwert in Abhängigkeit der Temperaturdifferenz der charakteristischen Temperatur des Gases und der Temperatur der Wand des Messrohres korrigiert wird.

30. Verfahren nach einem der Ansprüche 27 bis 29, **dadurch gekennzeichnet, dass** die Temperatur der Wand des Messrohres gemessen wird.

31. Verfahren nach einem der Ansprüche 29 bis 30, **dadurch gekennzeichnet, dass** die Temperatur des Gases im Messrohr gemessen wird.

32. Verfahren nach einem der Ansprüche 29 bis 31, **dadurch gekennzeichnet, dass** die charakteristische Temperatur des Gases aus den Laufzeiten und damit einem Schätzwert für die Schallgeschwindigkeit anhand eines physikalischen Modells des Temperaturprofils im Messrohr ermittelt wird.

33. Verfahren nach Anspruch 32, **dadurch gekennzeichnet, dass** die charakteristische Temperatur des Gases durch Berücksichtigung der Temperatur der Wand des Messrohres präzisiert wird.

34. Verfahren nach Anspruch 27 oder 33, **dadurch gekennzeichnet, dass** bei der Wahl der Zeitpunkte für die Temperaturmessung(en) und Laufzeitmessungen die Geometrie der Anordnung und die Strömungsgeschwindigkeit berücksichtigt werden.

35. Verfahren nach einem der Ansprüche 27 bis 34, **dadurch gekennzeichnet, dass** zur Berücksichtigung der Gaszusammensetzung bei der Korrektur des Schätzwertes der Gasmenge (37) ein nomineller Wert des Adiabatenkoeffizient für die Berechnung der Gasmenge angenommen wird.

36. Verfahren nach Anspruch 35, **dadurch gekennzeichnet, dass** der nominelle Wert des Adiabatenkoeffizienten entsprechend der charakteristischen Temperatur des Gases korrigiert wird.

37. Verfahren nach einem der Ansprüche 27 bis 36, **dadurch gekennzeichnet, dass** in Abhängigkeit vom Sendezeitpunkt und einem Schätzwert für die Laufzeit der Ultraschallsignale ein Erwartungszeitfenster für den Eintreffzeitpunkt des Empfangssignals bestimmt wird.

**38.** Verfahren nach einem der Ansprüche 27 bis 37, **dadurch gekennzeichnet, dass** die Abfolge der Sendezeitpunkte, d.h. die Messwiederholrate, in Abhängigkeit von der geschätzten Laufzeit angepasst wird.

**39.** Verfahren nach Anspruch 37 oder 38, **dadurch gekennzeichnet, dass** als Schätzwert für die Laufzeit die Laufzeit der vorangegangenen Messung herangezogen wird.

**40.** Verfahren nach Anspruch 37 oder 38, **dadurch gekennzeichnet, dass** als Schätzwert für die Laufzeit ein in Abhängigkeit des Ergebnisses der vorangegangenen Durchflussmessung modellhaft gebildeter Rechenwert herangezogen wird.

**41.** Verfahren nach einem der Ansprüche 37 bis 40, **dadurch gekennzeichnet, dass** für die Bestimmung der Laufzeit zuerst ein geschätzter Zeitpunkt für den Beginn des Empfangssignals festgelegt wird und der präzise Beginn durch Analyse der Phaseninformation des komplexwertig dargestellten Empfangssignals festgelegt wird.

**42.** Verfahren nach Anspruch 41, **dadurch gekennzeichnet, dass** das komplexwertige Empfangssignal durch Hilbert-Transformation des realen Empfangssignals bestimmt wird.

**43.** Verfahren nach Anspruch 41, **dadurch gekennzeichnet, dass** für das reelle Empfangssignal die aktuelle Phasenlage der komplexwertigen Darstellung des Empfangssignals bestimmt wird und zu einem beliebigen Zeitpunkt im Bereich einer steten Veränderung der Phasenlage der geschätzte Zeitpunkt für den Beginn des Empfangssignals festgelegt wird.

**44.** Verfahren nach Anspruch 41, **dadurch gekennzeichnet, dass** für den geschätzten Zeitpunkt des Beginns des Empfangssignals der Zeitpunkt des Auftretens der Maximalen Amplitude herangezogen wird.

**45.** Verfahren nach Anspruch 41, **dadurch gekennzeichnet, dass** ausgehend vom geschätzte Zeitpunkt für den Beginn des Empfangssignals der präzise Beginn des Empfangssignals anhand erstmalig verrauschter Phasenlage bestimmt wird.

**46.** Verfahren nach Anspruch 45, **dadurch gekennzeichnet, dass** der erste Nulldurchgang des Empfangssignals als den Eintreffzeitpunkt bestimmendes Signalmerkmal definiert wird.

Fig 1

Fig 2a

Fig 2

SIEHE DETAIL X

DETAIL X
MASSTAB 10.000

MASSTAB 2.000

Fig 3

Fig. 4

Fig.5

Fig. 6

EP 1 498 700 A2